# EUROPEAN PATENT APPLICATION

(11) **EP 1 253 546 A2**
(43) Date of publication of application: **30.10.2002**
(21) Application number: 02009282.1
(22) Date of filing: 29.04.2002
(51) Int. Cl.: G06K 7/10

(54) **Optical reading device**

(30) Priority: 27.04.2001 JP 2001133297
(71) Applicant: Kabushiki Kaisha Toshiba, Minato-ku, Tokyo 105 (JP)
(72) Inventor: Goto, Hiroshige, Intell. Prop. Div., Minato-ku, Tokyo (JP)
(74) Representative: HOFFMANN - EITLE

(57) **Abstract**

A portable communication equipment having an optical reading device for optically reading information on a sheet. A contact detection unit for detecting that a contact surface of the optical reading device with the measured matter contacts any of the information and a surface of sheet having the information thereon, the contact detection unit being provided on the contact surface. A reading unit having a light source unit and a light detection unit, wherein the light source unit is put in an operation state when the contact detection unit detects the contact of any of the measured matter and the surface of the sheet having the information thereon, and irradiates light from the contact surface to the information, and the light detection unit is put in the operation state when the contact detection unit detects the contact surface and any of the information and the surface having the information formed thereon, receives, from the contact surface, reflected light from the information, the light being irradiated from the light source, and converts the reflected light into an electric signal. A signal processing unit for analyzing the electric signal obtained by the light detection unit and changing to the electric signal into electrical information. A transmitting unit for transmitting the information, the information being read by the optical reading device.

## Description

### Technical field to which the invention relates

The present invention relates to an optical reading device and portable communication equipment having the optical reading device, and more particularly, to an activation method for a device for reading information via an optical system.

### Related background art

Recent years, technological development in the automatic recognition system has been remarkable, in which the bar code system has been most widespread.

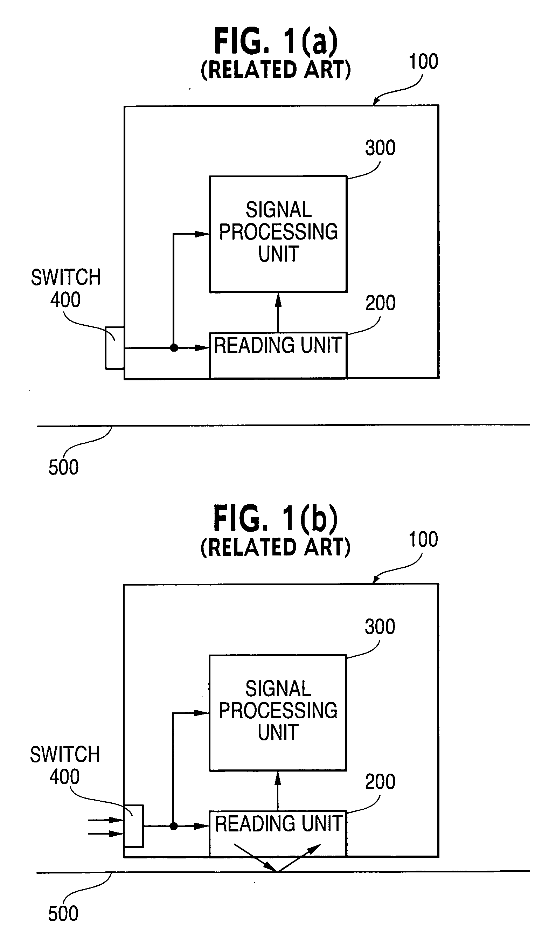

Description will be made for the structure of the conventional contact-type bar code reading device with reference to FIGS. 1A and 1B FIGS. 1A and 1B are cross-sectional views of the bar code reading device: FIG. 1A shows a state when the device does not read a bar code; and FIG. 1B shows a state when the device reads a bar code.

As illustrated, a contact-type bar code reading device 100 includes an optical reading unit 200 for reading a bar code, a signal processing unit 300 for processing information in the bar code read by the optical reading unit 200, and an activation switch 400 for controlling on/off of the bar code reading device 100.

The optical reading unit 200 has a light source for irradiating light to the bar code, an optical system for collecting light reflected from the bar code, and a solid-state imaging device for detecting the light collected by the optical system.

Next, description will be made for an operation of the contact-type bar code reading device 100. As shown in FIG. 1A, the bar code reading device 100 is in a non-operation state when the activation switch 400 is not pushed, and the optical reading unit 200 is also set in a non-operation state.

When the bar code is read, a user pushes the activation switch 400 as shown in FIG. 1B. The activation switch 400 is pushed, whereby the bar code reading device 100 is set in the operation state, and light is irradiated from the light source of the optical reading unit 200. Then, the bar code reading device 100 in the operation state is brought into contact, for example, with a bar code 510 printed on a sheet surface 500, and light reflected from the bar code is detected by the solid-state imaging device of the optical reading unit 200, then the detected light is subjected to analysis processing by the signal processing unit 300.

In the conventional bar code reading device described above, the activation switch 400 is provided on a surface different from a surface brought into contact with the bar code. Therefore, in order to read the bar code, the user must push the activation switch prior to reading the bar code, or alternatively, after the bar code reading device is brought into contact with the bar code, the user must push the activation switch 400.

Accordingly, particularly in the former case, there have been problems as will be described below. (1) The operation time of the bar code reading device is prolonged. Moreover, since the solid-state imaging device is set in the operation state before it is brought into contact with the bar code, due to an influence of peripheral light, (2) excessive light is possibly made incident onto the solid-state imaging device, thus causing an erroneous determination. If the excessive light is made incident as described above, (3) the solid-state imaging device is saturated to require an operation for recovery therefrom, resulting in an increase of power consumption. Furthermore, even in either case of pushing the activation switch before or after the reading device is brought into contact with the bar code, since the contact and the activation of the reading device are performed apart from each other, (4) the operation itself of reading the bar code is troublesome.

### Technical problem and the solution

An object of the present invention is to provide an optical reading device capable of improving reading accuracy and simplifying a reading operation, and to provide portable communication equipment provided with the optical reading device.

According to an aspect of the present invention, A portable communication equipment having an optical reading device for optically reading information comprising a contact detection unit, a reading unit, a signal processing unit and transmitting unit.

The contact detection unit for detecting that a contact surface of the optical reading device with the information contacts any of the measured matter and a surface of sheet having the information thereon, the contact detection unit being provided on the contact surface. The reading unit having a light source unit and a light detection unit, wherein the light source unit is put in an operation state when the contact detection unit detects the contact of any of the information and the surface of the sheet having the information thereon, and irradiates light from the contact surface to the measured matter, and the light detection unit is put in the operation state when the contact detection unit detects the contact surface and any of the information and the surface having the information formed thereon, receives, from the contact surface, reflected light from the information, the light being irradiated from the light source, and converts the reflected light into an electric signal. The signal processing unit for analyzing the electric signal obtained by the light detection unit and changing to the electric signal into electrical information. The transmitting unit for transmitting the information, the information being read by the optical reading device.

Other features, and advantages of the present invention will become apparent from the following detailed description. It should be understood, however, that the detailed description and specific examples, while indicating preferred embodiments of the invention, are given by way of illustration only, since various changes and modifications within the spirit and scope of the invention will become apparent to those skilled in the art from this detailed description.

### Brief description of the drawing

A more complete appreciation of the present invention and many of its attendant advantages will be readily obtained by reference to the following detailed description considered in connection with the accompanying drawings, in which:
FIGS. 1 shows a structure of a typical optical reading device: FIG. 1A is a cross-sectional view of a bar code reading device during non-operation; and FIG. 1B is a cross-sectional view thereof during operation.
FIGS. 2 shows a structure of an optical reading device according to a first embodiment of the present invention: FIG. 2A is a cross-sectional view of information reading device during non-operation; FIG. 2B is a block configuration diagram of an optical reading unit; and FIG. 2C is a cross-sectional view of the information reading device during operation.
FIG. 3 is a cross-sectional view of a optical reading device during operation, showing a structure of an optical reading device according to a second embodiment
FIGS. 4 show a structure of an optical reading device according to a third embodiment: FIG. 4A is a cross-sectional view of a optical reading device during operation; and FIG. 4B is a view showing a state of reading a bar code when a sheet surface is curved.
FIGS. 5 shows cross-sectional views of bar code reading devices during operation, showing structures of optical reading devices according to fourth to sixth embodiment.
FIG. 6 is a cross-sectional view of a optical reading device during operation, showing a structure of an optical reading device according to a seventh embodiment.
FIG. 7 is a perspective view of a portable telephone, showing an optical reading device according to a second embodiment of the present invention.
FIG. 8 is a block diagram partially showing an internal configuration of the portable telephone in FIG. 7.
FIG. 9 is a perspective view of a pen-type optical readings device, showing an optical reading device of a third embodiment of the present invention.
FIGS. 10A and 10B are block diagrams partially showing an internal configuration of the pen-type optical reading device in FIG. 9: FIG. 10A is a diagram showing a state during non-operation; and FIG. 10B is a view showing a state during operation.

### Detailed description of embodiment

The present invention will be described by embodiments with reference to the drawings. In this description, like portions are denoted by the same reference numerals over all of the drawings.

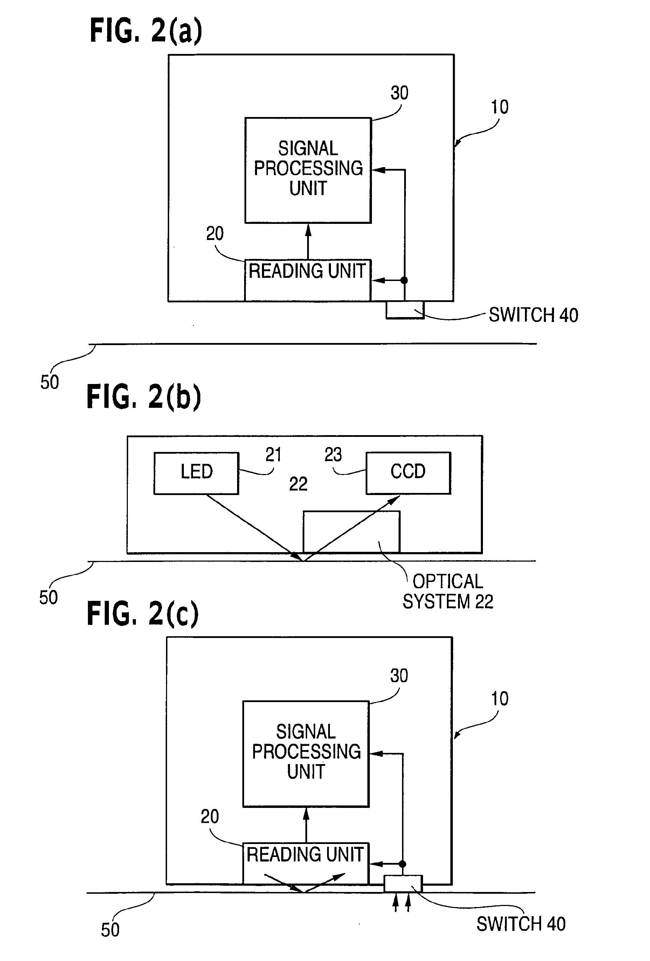

An optical reading device according to a first embodiment of the present invention will be described with reference to FIGS. 2A to 2C. FIGS. 2A to 2C show a contact-type optical reading device. FIG. 2A is a cross-sectional view of the optical reading device during non-reading; FIG. 2B is a block diagram of an optical reading unit in the optical reading device; and FIG. 2C is a cross-sectional view of the optical reading device during reading. The optical reading device read information, for example, bar code, character and letters.

As shown in FIG. 2A, a contact-type information reading device 10 includes an optical reading unit (reading unit) 20 for reading a information (bar code, character) by contacting the information, a signal processing unit 30 for processing information read by the optical reading unit 20, and an activation switch (contact detection unit) 40 for controlling on/off of the optical reading device.

As shown in FIG. 2B, the optical reading unit 20 has a light source 21, for example, such as a light emitting diode (LED), an optical system 22 comprising, for example, an optical lens system with equal magnification and a reducing optical lens system, and a solid-state imaging device (light detection unit) 23 such as a charge coupled device (CCD), CMOS type imaging sensor (CMOS sensor).

In the optical reading unit 20, a surface on which the optical system 22 is provided is a surface contacting the information (i.e., a contact surface), and the activation switch 40 is provided on the surface. Moreover, the activation switch 40 is a mechanical switch, which is, for example, pushed to be turned on.

Next, an operation of the contact-type optical reading device is described. This optical reading device 10 is put in a state of reading the information by pushing the activation switch 40. Specifically, as shown in FIG. 2A, when the optical reading device 10 is apart from, for example, a sheet surface 50 on which the information is printed, the activation switch 40 is not pushed. Therefore, the optical reading unit 20 and the signal processing unit 30 are set in a non-operation state.

When reading the information, the optical reading device 10 is brought into contact with the sheet surface 50 on which the information is printed. As described above, the surface on which the optical reading unit 20 is provided is the surface contacting the sheet surface 50, both of which are brought, into contact with each other so that a position of the optical reading unit 20 and a position of the bar code can make coincide with each other. Then, since the activation switch 40 contacts the sheet surface 50 to be pushed, the optical reading device 10 is put in the operation state. Specifically, the optical reading unit 20 and the signal processing unit 30 are put in the operation state. As shown in FIGS. 2B and 2C, the optical reading unit 20 is set in the operation state, whereby the light source 21 starts to irradiate light to the information. This irradiated light is reflected by reflectivity in accordance with lightness of the information. This reflected light is collected by the optical system 22, and the collected light is detected by the solid-state imaging device 23. Then, the solid-state imaging device 23 converts the detected light into an electric signal, which is then subjected to analysis processing by the signal processing unit 30.

The reading of the information is terminated when the signal processing unit 30 terminates the signal processing based on the signal from the optical reading device 10. At this point of time, the optical reading device 10 is put in the non-operation state. Moreover, the activation switch 40 is put in an off state by separating the optical reading device 10 from the sheet surface 50, thus also making it possible to set the optical reading device 10 in the non-operation state.

The optical reading device configured and operated as described above is put in the operation state simultaneously when it is brought into contact with the sheet surface on which the information is printed, and is put in the non-operation state after acquiring a specified signal. Specifically, the optical reading device is not put in the operation state until it reaches a state capable of actually reading the information. Accordingly, the operation time can be minimized while being maintained necessary and sufficient.

Moreover, the optical reading unit 20 is not put in the operation state until it contacts the bar code. Therefore, the excessive light can be prevented from being made incident onto the solid-state imaging device, thus making it possible to improve detection accuracy in the solid-state imaging device 23.

From the above, the solid-state imaging device can be prevented from saturation, and an increase of power consumption can be suppressed, which is caused for recovery therefrom.

Furthermore, since the activation switch is pushed simultaneously when the optical reading device contacts the information, it is sufficient if the user only brings the optical reading device into contact with the information in order to read the information, and the user does not have to push the activation switch. Therefore, the operation can be simplified.

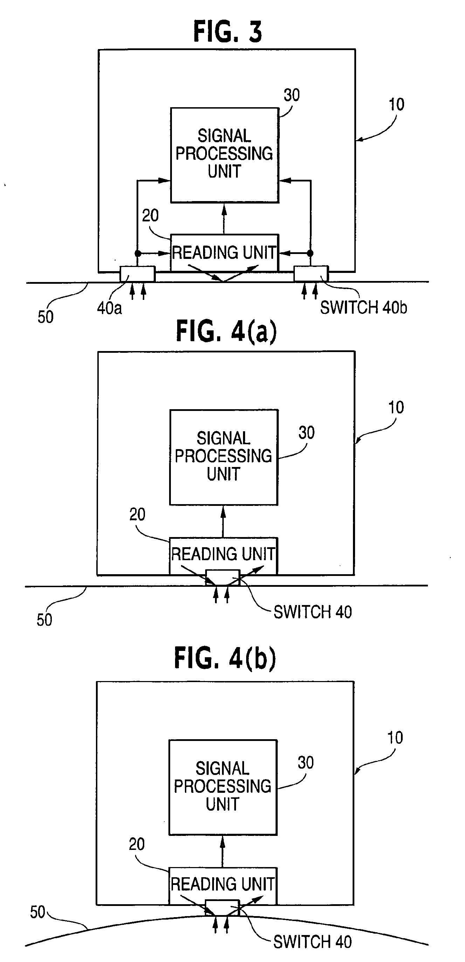

The position of the activation switch is not limited to the position as shown in FIGS. 2A and 2C. For example, disposition of the activation switch may be made as shown in FIG. 3. FIG. 3 is a cross-sectional view of a optical reading device according to a second embodiment.

As illustrated, two activation switches 40a and 40b may be provided in two spots sandwiching the optical reading unit 20. In this case, the optical reading device 10 may be put in the operation state when any one of the activations switches 40a and 40b is turned on or when both thereof are turned on. However, from a viewpoint of the reading accuracy for the information, it is more preferable to operate the information reading device 10 when both of the activation switches 40a and 40b are turned on. This is because, if the two activation switches 40a and 40b located sandwiching the optical reading unit 20 are turned on, the information can be read in a state where almost the entire surface of the optical reading unit 20 contacts the information, that is, in a state where the information and the optical reading unit are set parallel to each other. The optical reading device read information, for example, bar code, character and letters.

Though respective disposition of the two activation switches 40a and 40b at the positions shown in FIG. 3 enables the reading accuracy to be improved sufficiently, as a matter of course, more than two activation switches may be provided. The optical system 22 comprising, for example, an optical lens system with equal magnification and a reducing optical lens system, and a solid-state imaging device (light detection unit) such as a charge coupled device (CCD), CMOS type imaging sensor (CMOS sensor).

FIG. 4A and 4B are cross-sectional views of a optical reading device according to a third embodiment.

As shown in FIG. 4A, the activation switch 40 is provided on the center of the contact surface of the optical reading unit 20. Accordingly, the reading accuracy for the information can be improved more than the case as shown in FIGS. 2A and 2C, where the activation switch 40 is provided in one spot adjacent to the optical reading unit 20. This is obvious if the case is considered, where the sheet surface 50 on which information is printed is curved as shown in FIG. 4B. Specifically, the activation switch 40 is provided on the center of the optical reading unit 20. Thus, even if the sheet surface 50 is curved, a contact area of the optical reading unit 20 and the information can be increased to the maximum. Moreover, an interval between the optical reading unit 20 and the information can be reduced even in an area where the optical reading unit 20 and the bar code do not directly contact each other. Accordingly, the detection accuracy for the reflected light from the information can be improved, and an influence of the light from the outside can be suppressed to the minimum. The optical reading device read information, for example, bar code, character and letters.

As described above, the position where the activation switch is provided is not limited as far as it is on the surface contacting the sheet surface on which the information is printed, and various ways of disposition can be considered according to a request of the user. For example, when very high reading accuracy is not required for the optical reading device, it is sufficient if the activation switch is provided in one spot as described in the first embodiment. Rather than this, since the optical reading device is put in the operation state if only the activation switch contacts the sheet surface even in the case where the sheet surface on which the information is printed is curved, handling of the bar code reading device can be said to be improved for the user. On the contrary, if the optical reading device is put in the operation state when the plurality of activation switches are turned on, then the reading accuracy will be remarkably improved though the condition where the optical reading device is put in the operation state will become severe. The optical system comprising, for example, an optical lens system with equal magnification and a reducing optical lens system, and a solid-state imaging device (light detection unit) such as a charge coupled device (CCD), CMOS type imaging sensor (CMOS sensor).

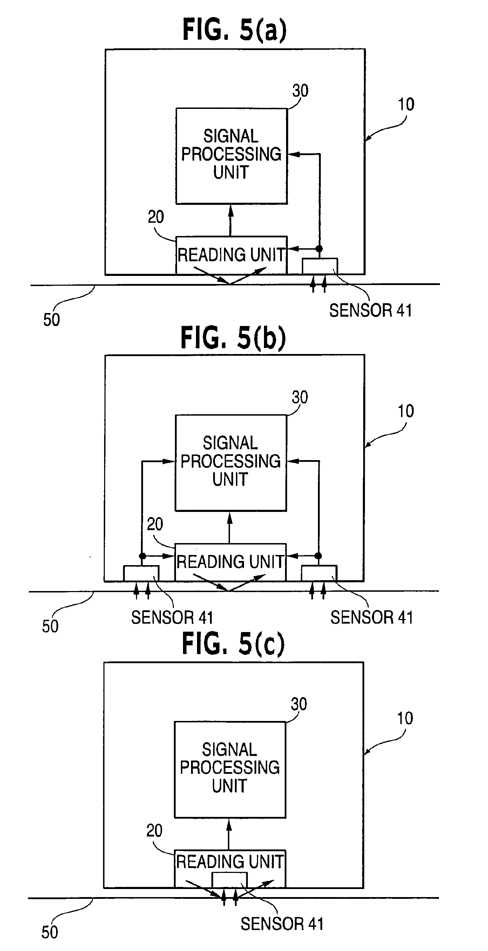

The description has been made for the example of using the push-type mechanical switch 40 in the first and second embodiment. However, the activation switch 40 is not limited as far as it can sense the contact of the bar code reading device to the information the sheet surface on which the information is printed. In order to sense the contact, for example, it is possible to use a contact conductance or a contact resistor. FIGS. 5A to 5C are cross-sectional views of optical reading devices according to third to fifth modification examples of this embodiment, each showing an example of using a sensor (contact sensor unit) 41 for sensing the contact of the optical reading device to the sheet surface in place of the activation switch.

FIG. 5A shows a optical reading device according to fourth embodiment, the sensor 41 is provided in one spot adjacent to the optical reading unit 20 similarly to the structure shown in FIGS. 2A and 2C. FIG. 5B shows a optical reading device according to fifth embodiment, the sensors 41 are provided in two spots sandwiching the optical reading unit 20 similarly to the structure shown in FIG. 3. FIG. 5C shows a optical reading device according to sixth embodiment, the sensor 41 is provided on the center of the optical reading unit 20 similarly to the structure shown in FIGS. 4A and 4B.

When the sensor and/or the sensors 41 are used, the mechanical operation in the information reading device 10 is decreased, and therefore, the operational reliability and the mechanical strength of the information reading device 10 can be enhanced. The optical reading device read information, for example, bar code, character and letters. The optical system comprising, for example, an optical lens system with equal magnification and a reducing optical lens system, and a solid-state imaging device (light detection unit) such as a charge coupled device (CCD), CMOS type imaging sensor (CMOS sensor).

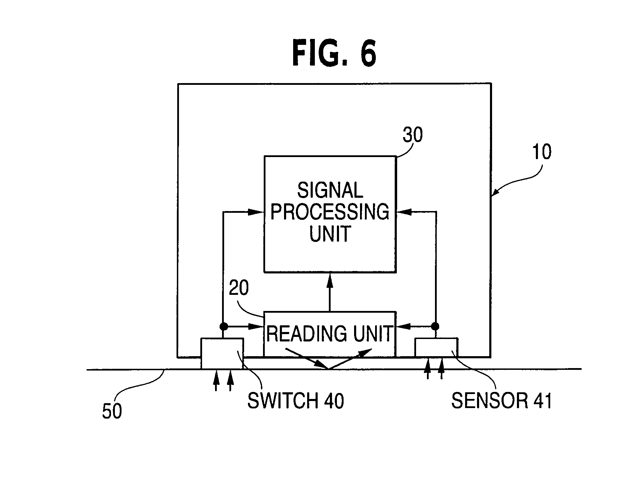

FIG. 6 is a cross-sectional view of a optical reading device according to a seventh modification example of this embodiment, showing where the push-type mechanical switch 40 and the sensor 41 are used together. The optical reading device read information, for example, bar code, character and letters.

As the sensor 41, for example, an electric capacitance pressure sensor, an electric resistance strain pressure sensor, a touch sensor using pressure-sensing conductive rubber, a touch sensor using pressure-sensing conductive plastics and the like can be used. The optical system comprising, for example, an optical lens system with equal magnification and a reducing optical lens system, and a solid-state imaging device (light detection unit) such as a charge coupled device (CCD), CMOS type imaging sensor (CMOS sensor).

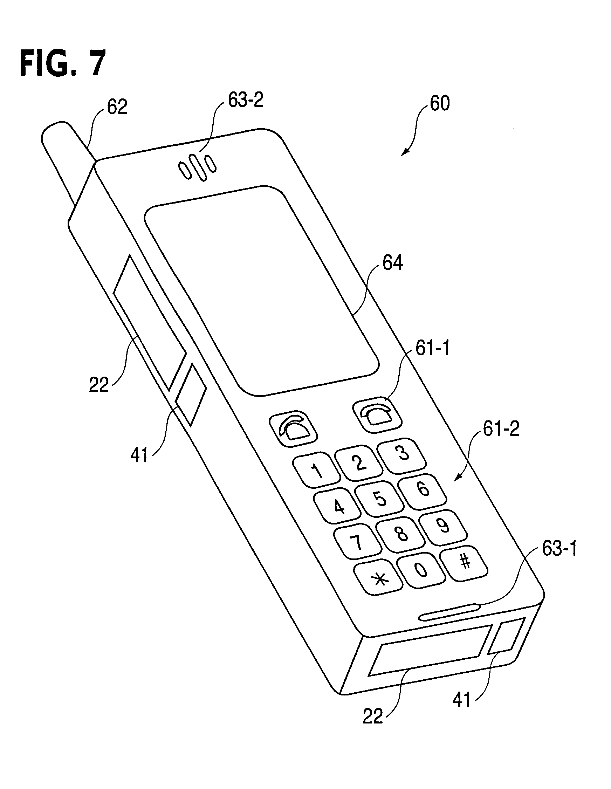

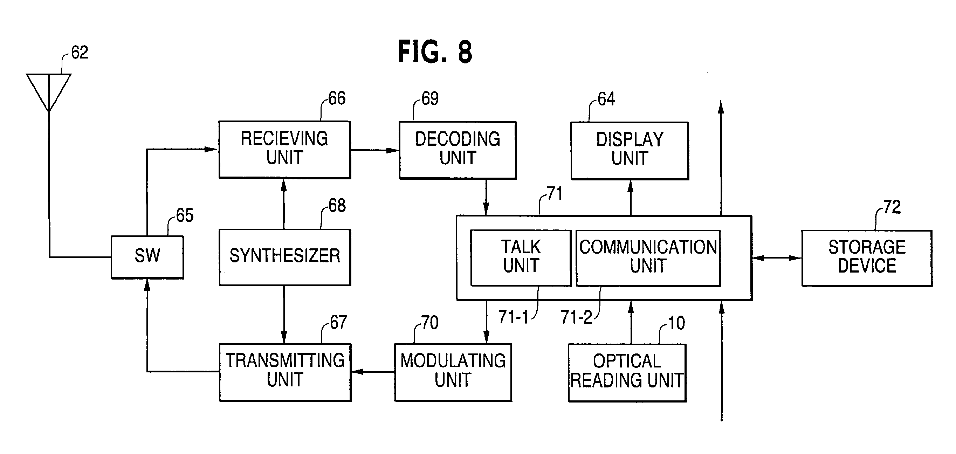

Next, description will be made for an optical reading device according to a fourth embodiment of the present invention with reference to FIGS. 7 and 8. FIG. 7 is a perspective view of an appearance of a portable telephone provided with the optical reading device according to this embodiment, and FIG. 8 is a block diagram partially showing an internal circuit of this portable telephone.

As shown in FIG. 7, a portable telephone 60 has a power button 61-1, dial buttons 61-2, a talk button 61-3, an antenna 62 transmitting and receiving an electric wave, a mouthpiece 63-1, an earpiece 63-2, a display unit 64 for displaying transmitted/received data and information concerning the data, and the bar code reading device on an appearance thereof. Note that, with regard to the optical reading device, only the optical system 22 and the sensor 41 for sensing the contact of the device to the information are exposed to the outside. Since this optical reading device has any of the configurations described in the first to sixth embodiment and the modification examples thereof, detailed description of the optical reading device will be omitted.

The portable telephone 60 has an internal circuit configuration as shown in FIG. 7. Specifically, the portable telephone 60 has the antenna 62, a high-frequency switch 65, a receiving unit 66, a transmitting unit 67, a synthesizer 68, a decoding unit 69, a modulating unit 70, a signal processing unit 71, the display unit 64, a supplemental storage device 72, and a optical reading unit 10 (which is the optical reading device described in the first embodiment).

First, a radio carrier wave signal having transmitted from an unillustrated base station is received by the antenna 62, and then inputted to the receiving unit 66 via the high-frequency switch 65. In the receiving unit 66, the received radio carrier wave signal is mixed with a reference oscillation signal generated by the synthesizer 68 to be downconverted into a received intermediate frequency signal.

The received intermediate frequency signal outputted from the receiving unit 66 is inputted to the decoding unit 69. In the decoding unit 69, the received intermediate frequency signal is subjected to digital decoding, whereby a digital decoded signal is reproduced.

The signal processing unit 71 decollates the digital decoded signal for each receiving time slot. If the data decollated in the slot is audio data, then the audio data is decoded by a talk unit 71-1. Then, the decoded data is subjected to D/A conversion to generate an analog audio signal, which is then loudened and outputted from the earpiece 63-2. Moreover, if the data decollated in the slot is packet data or control data, then the data is subjected to analysis control by a data communication unit 71-2, and displayed on the display unit 64 for example. Furthermore, these audio data, packet data and control data are stored in the supplemental storage device 72 in accordance with selection of the user.

Meanwhile, an audio signal of the user, which is inputted from the mouthpiece 63-1, is compressed and encoded by the signal processing unit 71. Furthermore, this encoded audio data and the control data and the packet data, which are outputted from the data communication unit, are multiplexed by the signal processing unit 71. Moreover, as described in the first embodiment, the optical reading unit 10 can read the information by bringing the portable telephone into contact therewith. This data is also multiplexed by the signal processing unit 71 similarly to the control data and the packet data.

Then, the modulating unit 70 subjects the transmitted intermediate frequency signal to digital modulation by the multiplexed digital communication signal, and the transmitted intermediate frequency signal thus modulated is inputted to the transmitting unit 67.

The transmitting unit 67 mixes the transmitted intermediate frequency signal thus modulated with the reference oscillation signal generated by the synthesizer 68, and upconverts the signal obtained by such mixing to a radio carrier wave frequency, and then the transmitting unit 67 amplifies the upconverted signal to a specified transmission power level. The radio carrier wave signal outputted from the transmitting unit 67 is transmitted from the antenna 62 via the high-frequency switch 65 to an unillustrated base station.

As described above, the portable telephone is provided with the optical reading device 10 described in the first embodiment, whereby the information read by the optical reading device 10 can be transmitted on the electric wave. Thus, it is made possible to share much information obtained from the bar code among many users instantaneously.

Moreover, the information in the information read by the optical reading unit 10 can be not only transmitted but also displayed on the display unit. With such a configuration, the information in the read information can be visually recognized, and confirmation can be made as to whether or not there is an error in the read information. Then, it is possible to transmit the read information to other users after recognizing the read information and confirming that there is no error therein.

Furthermore, according to needs, the information read by the optical reading device can be also stored in the supplemental storage device 72.

As described above, the bar code is read by very handy equipment such as the portable telephone, thus making it possible to simply realize the management and the sharing of the information. Moreover, if the portable telephone is used as the information reading device, then any surface thereof having an area of the printed surface of the bar code or more is defined as the contact surface in the portable telephone, thus making it possible to read the entire contents of the information once.

This embodiment is not limited to the portable telephone, and needles to say, this embodiment can be applied to a personal handyphone system (PHS) and other various kinds of mobile communication equipment. Moreover, in the perspective view of the portable telephone, which is shown in FIG. 6, the bar code reading units are provided in the two spots. This means that the bar code reading units may be provided on any surfaces, and it is sufficient if the bar code reading unit is provided in at least one of the two spots.

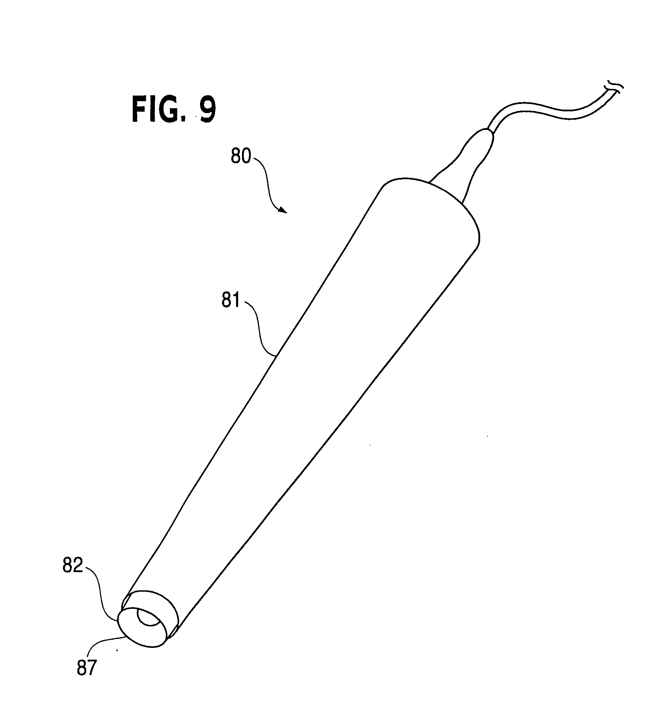

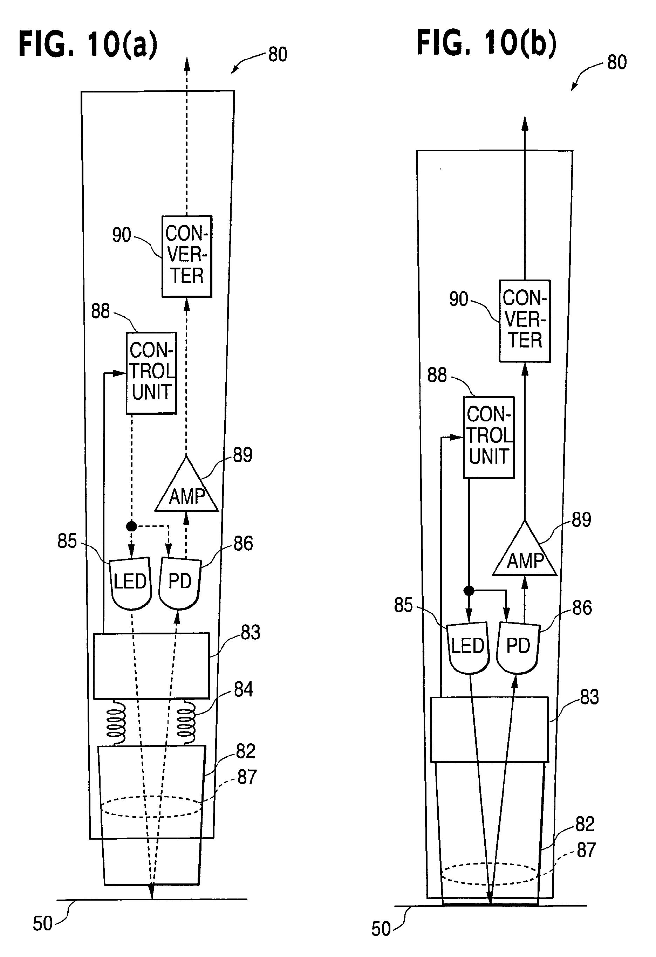

Next, description will be made for an optical reading device according to a third embodiment of the present invention with reference to FIGS. 9, 10A and 10B. FIG. 9 is a perspective view of an appearance of a pen-type bar code reading device, and FIGS. 10A and 10B are cross-sectional views thereof: FIG. 10A shows a state where the bar code reading device is not operated; and FIG. 10B shows a state where the bar code reading device is operated.

As illustrated, an optical reading device (bar code reading device) 80 according to this embodiment has a pen-type shape. This bar code reading device 80 is put in the operation state by thrusting a tip thereof against the bar code, thus reading the bar code.

As shown in FIGS. 9, 10A and 10B, the bar code reading device 80 includes a hollow body tube 81, a cap 82 provided on a tip of the body tube 81, a sensor 83 provided in the body tube, the sensor 83 being a contact detection unit together with the cap 82, springs 84 for connecting the cap 82 and the sensor 83, a light source 85 for irradiating light to the bar code, for example, such as an LED, a light sensor (light detection unit) 86 for detecting reflected light from the bar code, for example, such as a photo diode (PD), a lens 87 for collecting the light irradiated from the light source 85 and the reflected light, an optical system control unit 88 for controlling the light source 85 and the light sensor 86, an amplifier 89 for amplifying an output signal from the light sensor 86, and an A/D converter 90 for converting the output signal from the amplifier 89 into a digital signal.

Next, description will be made for an operation of the bar code reading device 80 described above. When the tip of the bar code reading device 80 is not thrust against the sheet surface 50 on which the bar code is printed, the cap 82 is apart from the sensor 83 due to elastic force of the springs 84. Then, the optical system control unit 88 puts the light source 85 and the optical sensor 86 in the non-operation state by means of a signal from the sensor 83. Thus, the bar code reading device 80 is set in the non-operation state.

When reading the bar code, the user thrusts the tip of the bar code reading device 80 against the sheet surface 50 on which the bar code is printed. Then, the cap 82 is pushed into the body tube 81 until it contacts the sensor 83. Then, the optical system control unit 88 recognizing that the cap 82 is pushed based on the signal from the sensor 83 puts the light source 85 and the light sensor 86 in the operation state. The light source 85 put in the operation state starts to irradiate light. This light is collected by the lens 87, the collected light is irradiated on the bar code, the light reflected therefrom is collected by the lens 87 again, and the collected light is detected by the light sensor 86. Then, the light sensor 86 converts the detected light into an electric signal. This electric signal is amplified by the amplifier 89, converted into a digital signal by the A/D converter 90, and sent to an unillustrated host computer.

The bar code reading device configured and operated as described above is put in the operation state simultaneously when the pen point is brought into contact with the bar code, and put in the non-operation state after the signal processing for the read information or at the moment when the pen point is brought into non-contact with the bar code. Specifically, the bar code reading device is put in the operation state only when reading the bar code. Accordingly, an effect similar to that of the first embodiment can be obtained.

As described in the first to third embodiments, the optical reading device according to the present invention is put in the operation state simultaneously when contacting the bar code, and put in the non-operation state when the bar code is read and the processing for the signal therein is terminated or at the moment when the optical reading device is brought into non-contact with the bar code. Therefore, the reading accuracy can be improved, and the reading operation can be simplified. Moreover, the bar code reading device as described above is provided in the mobile communication equipment, whereby much information obtained from the bar code can be shared among a large number of users instantaneously.

Though the above embodiments have been described by exemplifying the bar code as measured matter, as a matter of course, the measured matter is not limited only to the bar code. Specifically, the measured matter may be any optically readable information, for example, such as a character and an image. It is needless to say that the read information can be displayed on the display device and transmitted on the electric wave. Furthermore, though the above embodiments have been described by exemplifying the case where the bar code, that is, the measured matter is printed on the sheet surface, a surface on which the bar code is printed does not have to be the sheet surface, and is not limited by a material on which the bar code, the character, the image or the like is formed at all.

As described above, the purpose of the present invention exists in that a reading device for optically reading information detects contact thereof to measured matter or a surface on which the measured matter is formed, and that the device moves to an operation state after detecting the contact. Accordingly, the configuration of the present invention is not limited to those described in the first and third embodiments. Moreover, the light source and the light sensor are not limited to those described in the first and third embodiments, and a light source and a light sensor, which have functions similar thereto, can be applied. Furthermore, the activation switch 40, the sensor 41 and the cap 82 in the first to third embodiments do not have to contact the measured matter for themselves. This is because what is detected by these contact detection units is substantially that the reading device is in a necessary and sufficient state for reading the information. In other words, what is detected is that the reading device is in a state capable of detecting the light reflected from the measured matter without receiving the influence of the external light when the light source irradiates light to the measured matter. Accordingly, for example, in the first and second embodiments, what contacts the bar code itself is the optical reading unit 20, and the activation switch 40 or the sensor 41 does not contact the bar code, but may satisfactorily contact the sheet surface on which the bar code is printed. Also with regard to the cap 82 of the third embodiment, the same can be said.

As described above, according to the present invention, it is possible to provide the optical reading device capable of improving the reading accuracy and of simplifying the reading operation, and to provide the mobile communication equipment provided with this optical reading device.

In addition, many modifications may be made to adapt a particular situation or material to the teaching of the present invention without departing from the central scope thereof. Therefore, it is intended that this invention not be limited to the particular embodiments disclosed, but that the invention include all embodiments falling within the scope of the appended claims.

## Claims

1. An optical reading device for optically reading information, comprising:
a contact detection unit for detecting that a contact surface of the optical reading device with contacts a surface of sheet having the information thereon, the contact detection unit being provided on the contact surface;
a reading unit having a light source unit and a light detection unit, wherein the light source unit is put in an operation state when the contact detection unit detects the contact of the information and the surface of the sheet having the information thereon, and irradiates light from the contact surface to the measured matter, and the light detection unit is put in the operation state when the contact detection unit detects the contact surface and any of the information and the surface having the information formed thereon, receives, from the contact surface, reflected light from the information, the light being irradiated from the light source, and converts the reflected light into an electric signal; and
a signal processing unit for analyzing the electric signal obtained by the light detection unit and changing the electric signal into electrical information .

2. The optical reading device according to claim 1,
wherein the contact detection unit is a sensor for converting a pressure change caused by the contact thereof to any of the information and the surface of the sheet having the information formed thereon into the electric signal to sense the contact based on a change of the electric signal, and the light source and the light detection unit are put in the operation state by a contact sensing signal from the sensor.

3. The optical reading device according to claim 1,
wherein the contact detection unit includes a switch put in an on state by contacting any of the information and the surface of the sheet having the information formed thereon and being pushed, and
the switch is put in the on state to put the light source and the light detection unit in the operation state.

4. The optical reading device according to claim 1,
wherein the contact detection units are provided in at least two spots of the contact surface, and
the light source unit and the light detection unit are put in the operation state when at least one of the contact detection units detects the contact of the contact surface to any of the information and the surface of the sheet having the information formed thereon.

5. The optical reading device according to claim 1,
wherein the contact detection unit is provided on the contact surface corresponding to an approximate center of the reading unit.

6. The optical reading device according to claim 1,
wherein the measured matter is a bar code.

7. The optical reading device according to claim 1,
wherein the measured matter is a character.

8. The optical reading device according to claim 1,
wherein the measured matter is a figure.

9. The optical reading device according to claim 1,
wherein the light detection unit is a charge coupled device(CCD).

10. The optical reading device according to claim 1,
wherein the light detection unit is a CMOS sensor.

11. Portable communication equipment, comprising:
an optical reading device for reading information , comprising;
a contact detection unit for detecting that a contact surface of the optical reading device with information and a surface of sheet having the measured matter thereon, the contact detection unit being provided on the contact surface;
a reading unit having a light source unit and a light detection unit, wherein the light source unit is put in an operation state when the contact detection unit detects the contact of any of the information and the surface of the sheet having the information thereon, and irradiates light from the contact surface to the information, and the light detection unit is put in the operation state when the contact detection unit detects the contact surface and any of the information and the surface having the information formed thereon, receives, from the contact surface, reflected light from the information, the light being irradiated from the light source, and converts the reflected light into an electric signal;
a signal processing unit for analyzing the electric signal obtained by the light detection unit and changing to the electric signal into electrical information ; and
a transmitting unit for transmitting the electrical information to other equipment.

12. The portable communication equipment according to claim 11, further comprising:
a display device for displaying the information , the information being read by the optical reading device.

13. The portable communication equipment according to claim 11, further comprising:
a recording device for recording the information , the information being read by the optical reading device.

14. The portable communication equipment according to claim 11,
wherein the transmitting unit transmits the information via radio communication.

15. The portable communication equipment according to claim 11,
wherein the contact detection unit is a sensor for converting a pressure change caused by the contact thereof to any of the measured matter and the surface of the sheet having the information formed thereon into the electric signal to sense the contact based on a change of the electric signal, and the light source and the light detection unit are put in the operation state by a contact sensing signal from the sensor.

16. The portable communication equipment according to claim 11,
wherein the contact detection unit includes a switch put in an on state by contacting any of the information and the surface of the sheet having the measured matter formed thereon and being pushed, and
the switch is put in the on state to put the light source and the light detection unit in the operation state.

17. The portable communication equipment according to claim 11,
wherein the contact detection units are provided in at least two spots of the contact surface, and
the light source unit and the light detection unit are put in the operation state when at least one of the contact detection units detects the contact of the contact surface to any of the measured matter and the surface of the sheet having the measured matter formed thereon.

18. The portable communication equipment according to claim 11,
wherein the contact detection unit is provided on the contact surface corresponding to an approximate center of the reading unit.

19. The portable communication equipment according to claim 11,
wherein the measured matter is a bar code.

20. The portable communication equipment according to claim 11,
wherein the measured matter is a character.

21. The mobile communication equipment according to claim 11,
wherein the measured matter is a figure.

22. The portable communication equipment according to claim 11,
wherein the light detection unit is a charge coupled device(CCD).

23. The portable communication equipment according to claims 11,
wherein the light detection unit is a CMOS sensor.
